# EUROPEAN PATENT APPLICATION

(11) **EP 1 876 149 A2**
(43) Date of publication of application: **09.01.2008**
(21) Application number: 07116120.2
(22) Date of filing: 11.09.2004
(51) Int. Cl.: C03B 19/12, C03C 1/00, C03C 3/06, G21F 9/30

(54) **An Improved Sol-Gel Process, The Product Obtained Thereby Aan Method For Storing Nuclear Material Employing The Same**

(30) Priority: 01.10.2003 IT NO20030012
(62) Divisional of application: 04765097.3
(71) Applicant: Degussa Novara Technology S.p.A., 20016 Pero (MI) (IT)
(72) Inventor: Costa, Fulvio, 27048, Sommo (IT); Gini, Lucia, 28100, Novara (IT); Rückemann, Andreas, 28047, Oleggio (Novara) (IT); Costa, Lorenzo, 27048, Sommo (PV) (IT)
(74) Representative: Weber, Wolfgang

(57) **Abstract**

Sol-gel-process to prepare aerogels comprising the preparation of a solution of a compound having the formula Xm-M-(OR)n-m, the hydrolysis of the compound to give a sol, gelation, drying, densifying and sintering.

This method can be used to treat radioactive residues constituted by aqueous solutions of radioactive substances.

## Description

The present invention relates to an improved sol-gel process as well as to the aerogel product obtainable thereby, which is characterized by a very high mechanical resistance and a high pore volume; moreover the invention also refers to a method for the transformation of nuclear material into a shape which can be easily and economically stored, such a method comprising the use of the abovesaid improved sol-gel process: by traslation, therefore, the present invention relates also to a method for treating and storing radioactive effluents comprising the use of the improved sol-gel process hereinafter disclosed.

The aerogels are among the possible products of a sol-gel process. The aerogels are now mainly used as study materials aimed to thermoacoustic insulation and catalysis, as well as to intermediate products to manufacture glasses or ceramicglasses; moreover they can be used as very low dielectric constant insulating layers in the manufacture of integrated circuits.

It is known that the sol-gel processes are chemical procedures in which, starting from a solution (called "sol") of suitable precursors, a simple or mixed oxide is produced under the shape of a tridimensional solid body or as a thin layer on a carrier. Sol-gel processes are the object of many patent publications, and are disclosed, for instance, in the following patents: US-A-4.574.063, US-A-4.680.048, US-A-4.810.674, US-A-4.961.767 e US-A-5.207.814.

The starting solutions generally contain solvents selected among water, alcohol and hydroalcohol mixtures. The precursors may be metal or metalloid soluble salts such as nitrates, chlorides or acetates, also if a more common use is made of compounds having the general formula M(-OR)ₙ, in which M means the metal or the metalloid, -OR is an alcohol moiety (generally from an alcohol containing from one to four carbon atoms), and n means the M valence. The more commonly used precursors are tetramethoxyortosylane (known as TMOS), having the formula Si(OCH₃)₄, and the tetraethoxyortosilane (known as TEOS), having the formula Si(OCH₂CH₃)₄.

The first step of a sol-gel process is the precursor water promoted hydrolysis, water being the solvent or being added in the case of alcohol solutions, according to the reaction:

M(-OR)ₙ + n H₂O → M(OH)ₙ + n ROH (I)

This step is usually aid by pH low values, generally lower than 3, and preferably ranging between about 1 and 2.

The second step is the condensation of previously obtained M(OH)ₙ, according to the reaction:

M(OH)ₙ + M(OH)ₙ → (OH)ₙ₋₁M-O-M(OH)ₙ₋₁ + H₂O (II)

This reaction, covering all M(OH)n species being in the solution at the beginning, gives rise to an inorganic oxidic polymer with an open structure, the porosity of which contains the starting solvent and the alcohol produced in the reaction (I); such an inorganic polymer is called gel.

To have practical applications, the gel is to be dried through an extraction of the liquid phase present in the pores thereof. A possible drying method is carried out by a simple solvent evaporation; a dry gel obtained thereby is called "xerogel". It is known to the skilled people that the xerogel production is extremely difficult because of the high capillary strengths of the solvent against the pore walls during the evaporation, which sometimes let the gel be destroyed.

An alternative method to produce dry gels is carried out by a supercritical or ipercritic solvent extraction; dry gels obtained thereby are called "aerogels". In the ipercritic drying, the gel pore liquid is brought, inside suitable autoclaves, to pressure and temperature values higher than the relevant critical ones. Accordingly, the whole liquid volume contemporaneously moves from the liquid phase to the supercritical fluid phase, and the pore relevant capillary pressure continuously moves from the starting value to a reduced value thus avoiding the meniscus destructive strengths formed by the evaporation in the case of xerogel production. The procedure for the solvent supercritical extraction is for instance disclosed in the following patents: US-A-4.432.956 e US-A-5.395.805. The main problem concerning with this procedure is pertaining to the fact that alcohols, usually present in the gel pores after the formation thereof, have critical pressures (Pc) generally higher than 60-70 bar, and critical temperatures (Tc) higher than 250°C. These critical values force the use of extremely resistant and expensive autoclaves; furthermore, in the case of a gel in the form of a thin layer on a carrier (for instance, aimed to produce an aerogel dielectric state as one of the preparation step of integrated circuits), the critical temperatures of alcohols and esters may be too high and not compatible with the carrier or with other materials being thereon.

A technique to overcome the problem consists in the exchange of the pore liquid, before the extraction, with a liquid having a lower critical constants, particularly a lower Tc. For instance, it is possible to employ hydrocarbons, such as pentane or hexane, having Tc values of about 200°C. A further exchange can be carried out with an intermediate liquid, such as acetone, or, according to a general procedure, the gel pore solvent can be directly exchanged with a non protic solvent before any drying operation.

An alternative step, in the course of the aerogel preparation, comprises to exchange the aquagel liquid phase with xenon, to extract and recover xenon, such an exchange being preferably carried out by liquid xenon and the extraction thereof being carried out under supercritical conditions.

The crucial point of the sol-gel process, also affecting the aerogel nature and structure, consists in the hydrolysis/condensation step, mainly as for as pH, the dispersed phase control in order to control gelation and the gelation time monitoring are concerned. Accordingly the Applicant has found, what defines the first object according to the present invention, that a careful dispersion to control the gelation and a peculiar care about pH values in the hydrolysis and gelation steps, allow an aerogel to be prepared having characteristics other than any previous ones, and of such kind to let very aerogel be the second object of and fully comprised by the present invention.

Therefore the first object of the present invention is a sol-gel process to prepare aerogels comprising the following operations:
a) preparation of a water or hydroalcohol solution, or suspension of at least one compound having the formula

   Xₘ - M - (OR)ₙ₋ₘ

   in which M is a cation belonging to Groups 3, 4 or 5 of the Periodic System of the Elements; n is the cation valence, m is 0, 1 or 2, X is R1 or OR1, R and R1 are hydrocarbon radicals, the same or different, having a carbon atom number up to 12;
b) hydrolysis of the above referred compound to give the so called sol;
c) possible ultrawave treatment;
d) possible addition of a colloidal suspension of one M oxide, before or after the hydrolysis step;
e) sol gelation;
f) possible substitution of the solvent present in the gel pores;
g) gel drying;
h) possible densification or sintering of the product obtained thereby, in which
   - the hydrolysis step is carried out at a pH ranging from -2 to +3;
   - the gelation step is carried out at a pH maintained in the -2 ÷ +0,5 range;
   - a careful dispersion of the metallic precursor is carried out previous to and during the hydrolysis step.

The gel drying is preferably carried out under substantially supercritical conditions or under conditions close to the supercritical ones.

The metallic precursor undergoing the hydrolysis may be anyone compound suitable thereto according to the known art. Therefore use can be made of soluble salts such as, for instance, nitrates, chlorides or acetates; moreover use can be made of alcoxydes or alcoxyde mixtures according to the above said formula, this latter being the preferred case. Above all, outlines are put on silicon alcoxydes and, among these ones, on tetramethoxyortosylane, tetraethoxyortosylane and tetrapropoxyortosylane.

The hydrolysis is carried out in the presence of a catalyst, of the acid kind, and water can be present as solvent, or it may be added to an alcoholic solution of the interested precursor; the relevant conditions and procedure are the ones disclosed by the known art, according to, for instance, US patent no.5.207.814, wherein the hydrolysis is carried out at room temperature and preferably employed acid catalysts are chloride acid, nitric acid or acetic acid. Metal oxides, mainly silicon oxides, can be emulsified with the obtained sol to modify the properties thereof, according to the teaching of the above referred US patent, for instance.

The hydrolysis is carried out at room temperature, at a value of pH, equal to or other than the one pertaining to the following gelation/condensation, ranging between -2 and +1; the pH choice is a task of the skilled people, who will also evaluate the convenience to carry out the hydrolysis reaction under conditions the most possible close to the gelation ones.

The hydrolysis, in turn, is preceded by or affected under a continuous and careful stirring, so that the dispersion is carefully controlled in order to avoid a sudden condensation of the sol mass. Accordingly, an aerogel is obtained having physical and mechanical characteristics never seen, such as a high mechanical resistance and a remarkably wide pore volume. Aerogel, in turn an inventive object, is furtherly characterized by peculiar optical properties.

The other steps of the sol-gel process can be carried out according to the well known techniques, which are referred in the relevant literature, either patent or not: the above mentioned one is surely the most relevant.

A peculiarly advantageous use of the sol-gel process according to the present invention, is the application thereof in a method for recovering and storing the radioactive wastes.

The radioactive residues, also called radioactive wastes or effluents, are radioactive substances that cannot be furtherly employed. Therefore, the same have to be carefully stored or discharged to be not dangerous. They are solid, liquid or gaseous substances produced in the nuclear plants, in the research centers or by radioisotope users. Treating and conditioning the radioactive wastes, above all the high activity liquid ones, requires high specialization problems to be solved. One of the main problems coming from managing a plant for a nuclear fuel treatment is given by the need of a long storage for the radioactive liquid residues containing the uranium and plutonium separated fission products. Generally such a treatment consists in a preliminar concentration and in the following maintenance of the concentrated product in suitable shielded containers, till to a sufficient radioactivity decay. In the particular case of strongly radioactive liquid effluents, usually coming from the first stage of the fuel retreatment, the residues, after a dry concentration, are stored within suitable containers put inside underground stores, shielded by thick concrete walls, over a time enough to a total, or substantially total decay.

A problem relevant to this dry concentration is the strong nitric acidity of the treated liquids; it is partially removed through the evaporation, while a part thereof is neutralized by alkoli, what increases the amount of solid residue forming salts. Another problem is given by the difficulties of the concentration operations, owing to the highly radioactive material, the vapor radioactive sprays, and the bad heat transmission due to crystallized salt scale formation. An attempt has been made to concentrate these solutions by means of the heat caused by the radioactive decomposition of the present products: by using quite large vessels to reduce the surface/volume ratio, the same being well insulated and well ditched, the operation may be carried out, even if a lot of year are compulsory to reduce the involved liquids to a little volume.

The following methods can also be cited, among the ones either proposed or applied on a small scale or even through a mere experimental way:
- the use of the radioactive waters to make concrete blocks to underground: during the concrete thickening the salts would be fixed as unsoluble compounds, these ones being consequently not removable by the rain or underground waters;
- the treatment with zeolites or zeolite compounds which fix the radioactive metal ions; subsequently the ion charged zeolites are calcined to be transformed into unsoluble compounds and then undergrounded;
- the dry evaporation and the subsequent melting with glassy compounds (silica, phosphates, etc.) to give glasses which are stored underground, too; alternatively, the use of composite aerogels has been proposed to incorporate the radioactive material inside the matrix pores;
- the dry evaporation in metal crucibles (possibly with fluxes) which are then hermetically closed and stored underground, too;
- the transformation into glassy bodies through a sol-gel process on solutions of alkoxydes and radioactive wastes, at a low radioactive level and diluted concentration (US 5.494.663).

All methods, either employed or simply experimentally proposed, are however expensive and need difficult control operations, large storage spaces because of the high involved volumes and, consequently, transportation problems and costs.

The Applicant has found, what is the third object of the present invention, that the application of the above mentioned improved sol-gel technology in the method for recovering and storing the liquid radioactive effluents allows to overcome all drawbacks occurring in the methods till now suggested, by giving substantial cuts of the costs relevant to the liquid separation as well as to the vitrification, very high chemical and thermal stability of the final product (fundamentally silica glass), remarkable volume reduction, high morphological flexibility of the vitrificated product.

Therefore an object of the present invention consists in a process for the treatment of radioactive residues essentially constituted by aqueous solution of radioactive substances, at high radioactively level too, as well as for the subsequent storing thereof comprising the following operations:
- pH control of the radioactive effluent solution to be treated, and possible regulation thereof in the -2 ÷ +1,0 range;
- addition of the above said solution of a compound selected among the ones belonging to the formula of the preceding item a), as such or under the shape of an aqueous or hyidroalcoholic solution or suspension;
- hydrolysis of the obtained mixture to form sol;
- possible addition of a colloidal suspension of a M oxide, before or after the hydrolysis step;
- meanwhile the preceding operations are carried out, suitable stirring;
- possible ultrasonic treatment of sol;
- sol gelation;
- possible replacement of the gel pore solvent with a non protic solvent;
- gel drying;
- gel sinterization to form a glassy body;
- insertion of the glassy body in a suitable material container;
- container storage.

The radioactive effluents, as said, are aqueous solutions of many radioactive substances, whose composition depends on the source thereof. In view of the treatment, they belong to three classes:
- high radioactive level: from 10³ to 10⁵ curie/m³;
- medium radioactive level: from 10⁻³ to 10³ curie/m³;
- low radioactive level: below 10⁻³ curie/m³.

The inventive process shows significant advantages with respect to the known art methods, particularly as for as the strongly radioactive liquid is concerned. As to the M compounds according to the above said formula, a peculiar meaning is given by the use of tetramethoxyortosilane and tetraethoxyortosilane.

Among the listed operations, the gel drying is preferable carried out under substantially supercritical conditions, or conditions close to the supercritical ones, according to well known technologies, for instance according to the disclosure of the above said United States patents.

The material employed to contain the glassy body obtained by the gel sinterization is selected from the ones normally used in the field, stainless steel being the preferred one. Also the container storage is carried out according to well known methodologies, for instance inside underground structures well protected by concrete building works.

The method for the treatment of the radioactive wastes, as well as the improved sol-gel process, carried out according to the disclosure of the present invention will be furtherly illustrated by the following examples, clearly reported in order to better outline the many items of the present invention, without any limitation of the meaning and the coverage thereof.

### EXAMPLES

### Example 1: (comparative): hydrolysis with no gelation control

300 cc of 3.4 molar aqueous HN03 were transferred into a laboratory vessel made by "duran" glass and having a 800 cc capacity. A magnetic anchor of 6 cm length was put in the flask. The same was put on a high power magnetic stirrer (FALK, F40 ST serial n. A973115). 100 g of TEOS were gradually added to the nitric acid container, under a good stirring. The selected stirring level corresponded to a 4 value within a 10 level scale and allowed the liquid to have a high rotation speed inside the flask.

The mixing of the two liquids formed a transparent and apparently homogeneous emulsion. The emulsion stirring continued also after TEOS addition. After about 30 minutes from the TEOS addition beginning, the temperature reached the maximum value, at 55°C. After about minutes from the beginning the temperature lowered to 40°C, what was meaning the gelling beginning, that fastly run. After 45 minutes the gelation was total and the flask content was practically solid.

### Example 2: hydrolysis with the gelation time control

300 ml of 3.4 molar aqueous HN03 were transferred into a laboratory vessel made by "duran" glass and having a 800 cc capacity. A magnetic anchor of 6 cm length was put in the flask. The same was put on a high power magnetic stirrer (FALK, F40 ST serial n. A973115). 100 g of TEOS were weighed in a graduated cylinder to be added to the nitric acid container.

Attention was given to reach the maximum rotation speed without flow escape from the flask under the liquid stabilized rotating speed. There were a deep whirlpool in the vessel middle and a high peripherical level of the liquid which came close to the vessel edge. The level of the absorbed power was the maximum one: 10 on the above said scale.

At this point, TEOS was gradually added under the same stirring regime.

The emulsification kinetic of the two liquids is reported in the following table:

| Time (min) | 0 | 1 | 2 | 3 | 5 | 10 | 20 |
|---|---|---|---|---|---|---|---|
| Temperature | 29°C | 40°C | 53°C | 52°C | 51°C | 48°C | 45°C |
| Appearance | clear | clear | clear | clear | clear | clear | clear |

The clear sol was then treated by ultrasounds (3 minutes at a 4 power by means of a Bronson Sonifier 450). During the ultrasonic treatment, the stirrer was kept under the lowest speed.

After 30 minutes the clear sol was poured into two transparent polyethylene moulds, that were slightly conical and scaled to prevent from evaporation.

At 35 minutes, the two samples were clear with a very mobile surface.

At 60 minutes, the samples were still clear with a slightly less mobile surface.

At 95 minutes the gelation surely started on still liquid samples.

After 4 hours and 20 minutes, the two samples were substantially solid.

The difference of the behavior between the present sol and the preceding example sol was evident in the delay of the gelling phase with respect to the hydrolysis phase as well as in the slow and gradual proceeding of the gelling phase in this example procedure, which let the same be controlled within an industrial molding process. The only programmed difference among the experimental conditions of the examples 1 and 2 was the much more strong and systematic stirring carried out in the course of this example 2.

### Example 3: gel conditioning to be supercritically dried

Gels prepared according to the example 2 were subjected to a solvent exchange to be made suitable to undergo a drying under supercritical conditions. To the aim, gels were transferred, through a suitable procedure, from the starting mould into a bidistilled water container and poured thereinto. By a systematic water exchange in the container, gel pH was brought to about 4 along a 72 hours time. The liquid was than exchanged with an acetone/water mixture, acetone gradually enriched till to a 99.5 % acetone content.

Gels were then subjected to a supercritical drying in suitable autoclave (Brignole 0523 of AU 95 kind). At the autoclave cycle end, aerogels were obtained, with a net and full morphology, with no chip or crack, and no defect at the optical inspection, being also very resistant towards possible mechanical stresses.

### Example 4: vitrification

A cylindrical aerogel produced according to the example 3 was glass densified as follows.

The aerogel was positioned in the sample basket room of a suitable densification oven made by Novara Technology allowing treatments up to 1400°C in a quite safe environment under inert, or oxidizing or corrosive atmosphere as well as in the absence of any atmosphere. The sample was oxygen calcined at 800°C; then it was subjected to a HCl atmosphere at a 10% volume in helium containing oxygen traces, at a temperature higher than 1350°C, but lower than 1400°C. At the cycle end, a silica glass cylinder was obtained having sizes linearly reduced with respect of the mould (or the original gel) internal volume by a factor of about 2.8. By volume, the densified glass filled a volume roughly equal to 22nd fraction of the mould internal volume.

### Example 5: gelation in the presence of high concentration metal cations

300 cc of diluted 1.5 molar HN03 were poured into a 500 cc plastic vessel and put under a propeller stirring, at about 250 r/m, the solution temperature being 30°C. Along about 5 minutes, 114.0 g of Al(NO3)3 and H2O were gradually added, and the solution temperature lowered to 21°C. The propeller speed was increased to about 450 r/m. By the use of an ice bath, the solution temperature lowered to about 8°C. 100g of TEOS were put in a dipping funnel, and the propeller speed was furtherly increased to about 800 r/m. At this point TEOS addition was gradually added, and this addition was ended after 15 minutes with a temperature increase of 14°C, i.e. the solution final temperature was 22°C.

The solution was then subjected to ultrasounds for 5 minutes (Bronson Sonifier 450, 4 power), still by the use of an ice bath to avoid a too large temperature increase. Sol, very clear appearing, was then poured into five transparent slightly conic moulds. The gelation starting occurred about 4 hours after the sol pouring. Five aquagels were obtained, which were transparent at optical inspection and apparently homogeneous.

### Example 6: simulation of a radioactive waste typical composition

300 cc of 1.5 molar HNO3 were poured into a 500 cc plastic vessel and put under stirring by means of a propeller stirrer at about 250 r/m. The solution temperature was 30°C.

Along about five minutes, 114.0 g of Al(NO3)3 and H2O were gradually added, and the temperature lowered to 21°C. The propeller speed was increased to 450 r/m. 10.8 g of FeCl3 aqueous solution at 4.5% b.w. were added Thereafter, 5 g of an aqueous solution containing 0.1 g of Nd(N03)3 and 0.1 g of Ce(N03)3 were gradually added. By means of an ice bath, the solution temperature was lowered to about 8°C. 100g of TEOS were put in a dipping funnel and the propeller speed was furtherly increased to about 800 r/m; at this point the TEOS addition was gradually started, which ended after 15 minutes, the temperature increasing of 14°C till to the final temperature of 22°C. The solution was then subjected to 5 minutes ultrasounds (Bronson Sonifier 450), still by using an ice bath to avoid a strong temperature increase. The sol, quite liquid appearing, was then poured into slightly conic transparent polyethylene moulds. The gelation starting occurred about 4 hours after the sol pouring.

Five aquagels were obtained, perfectly transparent at the optical inspection and apparently homogeneous.

## Claims

1. Process for the treatment of aqueous radioactive effluents comprising the following operations:
- pH control of the radioactive effluent solution to be treated, and possible regulation thereof in the - 2 ÷ +1,0 range;
- addition of the above said solution of a compound selected among the ones belonging to the formula of the preceding item a), as such or under the shape of an aqueous or hyidroalcoholic solution or suspension;
- hydrolysis of the obtained mixture to form sol;
- possible addition of a colloidal suspension of a M oxide, before or after the hydrolysis step;
- meanwhile the preceding operations are carried out, suitable stirring;
- possible ultrasonic treatment of sol;
- sol gelation;
- possible replacement of the gel pore solvent with a non protic solvent;
- gel drying;
- gel sinterization to form a glassy body;
- insertion of the glassy body in a suitable material container;
- container storage.

2. Process for the treatment of aqueous radioactive effluents according to the preceding claim in which the compound added to said effluent solution is preferably selected between tetramethoxyortosilane and tetraethoxyortosilane.

3. Process for the treatment of aqueous radioactive effluents according to claim 1 in which the gel drying is preferably carried out under substantially supercritical conditions or under conditions close thereto.

4. Process for the treatment of aqueous radioactive effluents according to claim 1 in which said effluent is particularly constituted by high level radioactivity liquids.
